# EUROPÄISCHE PATENTSCHRIFT

(11) **EP 2 190 939 B1**
(45) Veröffentlichungstag und Bekanntmachung des Hinweises auf die Patenterteilung: **11.05.2011**
(21) Anmeldenummer: 08803607.4
(22) Anmeldetag: 03.09.2008
(51) Int. Cl.: C09D 183/02

(54) **BESCHICHTUNGSZUSAMMENSETZUNG FÜR SCHAUMSTOFFPARTIKEL UND VERFAHREN ZUR HERSTELLUNG VON SCHAUMSTOFFFORMKÖRPERN**
COATING COMPOSITION FOR FOAM PARTICLES, AND METHOD FOR THE PRODUCTION OF MOLDED FOAM BODIES
COMPOSITION DE REVÊTEMENT POUR PARTICULES ALVÉOLAIRES ET PROCÉDÉ DE FABRICATION D'ÉLÉMENTS MOULÉS ALVÉOLAIRES

(30) Priorität: 14.09.2007 EP 07116454; 16.06.2008 EP 08158327
(43) Veröffentlichungstag der Anmeldung: 02.06.2010
(73) Patentinhaber: BASF SE, 67056 Ludwigshafen (DE)
(72) Erfinder: NEHLS, Benjamin, 67063 Ludwigshafen (DE); HAHN, Klaus, 67281 Kirchheim (DE); KELLER, Andreas, 67459 Böhl-Iggelheim (DE); SCHMIED, Bernhard, 67227 Frankenthal (DE)
(86) Internationale Anmeldenummer: PCT/EP2008/061636
(87) Internationale Veröffentlichungsnummer: WO 2009/037116

(56) Entgegenhaltungen:
- DE-A1- 10 358 786
- DE-A1-102007 012 626

## Beschreibung

Die Erfindung betrifft eine Beschichtungszusammensetzung, Verfahren zur Herstellung von beschichteten Schaumstoffpartikeln, sowie daraus hergestellte Schaumstoffformköper und deren Verwendung.

Partikelschaumstoffe werden üblicherweise durch Versintern von Schaumstoffpartikeln, beispielsweise aus vorgeschäumten expandierbaren Polystyrolpartikeln (EPS) oder expandierten Polypropylenpartikeln (EPP), in geschlossenen Formen mittels Wasserdampf erhalten.

Schwerentflammbare Polystyrolschaumstoffe werden in der Regel mit halogenhaltigen Flammschutzmitteln, wie Hexabromocyclododekan (HBCD), ausgerüstet. Die Zulassung als Dämmstoffe im Bausektor ist allerdings auf bestimmte Anwendungen begrenzt. Ursache dafür ist unter anderem das Schmelzen und Abtropfen der Polymermatrix im Brandfalle. Darüber hinaus sind die halogenhaltigen Flammschutzmittel hinsichtlich ihrer toxikologischen Eigenschaften nicht uneingeschränkt einsetzbar.

Die WO 00/050500 beschreibt flammgeschützte Schaumstoffe aus vorgeschäumten Polystyrolpartikeln, welche zusammen mit einer wässrigen Natriumsilikatlösung und einem Latex eines hochmolekularen Vinylacetatcopolymer gemischt, in eine Form gegossen und unter Schütteln an Luft getrocknet werden. Hierbei entsteht nur eine lose Schüttung aus Polystyrolpartikeln, die an wenigen Punkten miteinander verklebt sind und daher nur ungenügende mechanische Festigkeiten aufweisen.

Die WO 2005/105404 beschreibt ein energiesparendes Verfahren zur Herstellung von Schaumstoffformkörpern, bei der die vorgeschäumten Schaumstoffpartikel mit einer Harzlösung beschichtet werden, welche eine gegenüber dem expandierbaren Polymer niedrigere Erweichungstemperatur aufweist. Die beschichteten Schaumstoffpartikel werden anschließend in einer Form unter Anwendung äußeren Drucks oder durch Nachexpansion der Schaumstoffpartikel mit heißem Wasserdampf verschweißt.

Die WO 2005/07331 beschreibt expandierte Polystyrolschaumstoffpartikel mit einer funktionellen Beschichtung, welche mittels eines Lösungsmittels, welches die Polystyrolschaumstoffpartikel nur wendig angreift, aufgebracht wird. Zur Flammschutzbeschichtung kann die Oberfläche beispielsweise mit einer Alumiumhydroxidpartikel enthaltenden, methanolischen Polyvinylacetatlösung beschichtet werden. Um ein Verkleben während der Entfernung des Lösungsmittels zu verhindern, müssen die Partikel mit einer Trennflüssigkeit, beispielsweise Ethylenglykol besprüht werden.

Werden in den üblichen Formteilautomaten beschichtete Schaumstoffpartikel eingesetzt, so können bei der Verwendung von Wasserdampf wasserlösliche Bestandteile herausgelöst werden.

Die WO 2007/023089 beschreibt ein Verfahren zur Herstellung von Schaumstoffformkörpern aus vorgeschäumten Schaumstoffpartikeln, welche eine Polymerbeschichtung aufweisen. Als bevorzugte Polymerbeschichtung wird eine Mischung aus einer Wasserglaslösung, Wasserglaspulver und einer Polymerdispersion eingesetzt. Der Polymerbeschichtung können gegebenenfalls hydraulische Bindemittel auf Basis von Zement oder Metallsalz-Hydrate, beispielsweise Aluminiumhydroxid zugesetzt werden.

Ein ähnliches Verfahren beschreibt die noch unveröffentlichte EP-Anmeldung Nr. 6122127, bei dem die beschichteten Schaumstoffpartikel getrocknet und anschließend zu einer Feuer- und hitzebeständigen Schaumstoffformteilen verarbeitet werden können.

Hydraulische Bindemittel wie Zement binden ihn wässrigen Aufschlämmung in mit Kohlendioxid schon bei Raumtemperatur ab. Dadurch kann eine Versprödung der Schaumstoffplatte auftreten. Außerdem halten die nach dem zitierten Stand der Technik hergestellten Schaumstoffplatten Temperaturen von über 800°C im Brandfall nicht stand und brechen im Brandfall zusammen.

Aufgabe der vorliegenden Erfindung war es, den genannten Nachteilen abzuhelfen und eine Beschichtungszusammensetzung für Schaumstoffpartikel zu finden, die es ermöglicht, die beschichteten Schaumstoffpartikel zu halogenfreien, feuer- und hitzebeständigen Schaumstoff-Formteilen zu verarbeiten. Die Beschichtung sollte insbesondere zu keiner Versprödung der Schaumstoffformteile führen und die strukturelle Integrität der Schaumstoffformteile auch bei Temperaturen über 800°C gewährleisten.

Demgemäß wurde eine Beschichtungszusammensetzung gefunden, welche
a) 20 bis 70 Gew.-%, insbesondere 30 bis 50 Gew.-% eines Tonminerals
b) 20 bis 70 Gew.-%, insbesondere 30 bis 50 Gew.-% eines Alkali -Silikates
c) 1 bis 30 Gew.-%, insbesondere 5 bis 20 Gew.-% eines verfilmenden Polymeren, enthält.

Eine bevorzugte Beschichtungszusammensetzung enthält
a) 30 bis 50 Gew.-%, insbesondere 35 bis 45 Gew.-% eines Tonminerals
b) 30 bis 50 Gew.-%, insbesondere 35 bis 45 Gew.% eines Alkali -Silikates
c) 5 bis 20 Gew.-%, insbesondere 7 bis 15 Gew.-% eines verfilmenden Polymeren
d) 5 bis 40 Gew.-%, insbesondere 10 bis 30 Gew.-% eines Infrarot-Absorbierenden Pigmentes.

Die vorstehenden Mengenangaben beziehen sich jeweils auf Feststoff bezogen auf Feststoff der Beschichtungszusammensetzung. Bevorzugt ergänzen sich die Komponenten a) bis c) bzw. a) bis d) zu 100 Gew.-%.

Bevorzugt liegt das Gewichtsverhältnis Tonmineral zu Alkali-Silikat in der Beschichtungszusammensetzung im Bereich von 1 : 2 bis 2 : 1.

Als Tonminerale eignen sich insbesondere Allophan Al₂[SiO₅]&O₃ · n H₂O, Kaolinit Al₄[(OH)₈|Si₄O₁₀], Halloysit Al₄[(OH)₈|Si₄O₁₀] · 2 H₂O, Montmorillonit (Smectit) (Al,Mg,Fe)₂[(OH₂|(Si,Al)₄O₁₀] · Na_{0,33}(H2O)₄, Vermiculit Mg₂(Al,Fe,Mg)[(OH₂|(Si,Al)₄O₁₀] · Mg_{0,35}(H₂O)₄ enthaltende Mineralien oder Mischungen davon. Besonders bevorzugt wird Kaolin eingesetzt.

Als Alkali-Silikat wird vorzugsweise ein wasserlösliches Alkalisilikate mit der Zusammensetzung M₂O(SiO₂)ₙ mit M = Natrium oder Kalium und n = 1 bis 4 oder Mischungen davon eingesetzt.

In der Regel enthält die Beschichtungszusammensetzung als verfilmendes Polymer, ein unvernetztes Polymer, das eine oder mehrere Glasübergangstemperaturen im Bereich von -60° bis + 100 °C aufweist. Bevorzugt liegen die Glasübergangstemperaturen des getrockneten Polymerfilmes im Bereich von -30° bis + 80°C, besonders bevorzugt im Bereich von -10° bis + 60°C. Die Glasübergangstemperatur kann mittels Differential Scanning Calorimetrie (DSC, gemäß ISO 11357-2, Aufheizrate 20 K/min) bestimmt werden. Das Molekulargewicht des Polymerfilms, bestimmt nach Gelpermeationschromatographie (GPC), liegt bevorzugt unter 400.000 g/mol.

Bevorzugt enthält die Beschichtungszusammensetzung als verfilmendes Polymer ein Emulsionspolymerisat aus ethylenisch ungesättigten Monomen, wie vinylaromatischen Monomeren, wie α-Methylstyrol, p-Methylstyrol, Ethylstyrol, tert.-Butylstyrol, Vinylstyrol, Vinyltoluol, 1,2-Diphenylethylen, 1,1-Diphenylethylen, Alkenen, wie Ethylen oder Propylen, Dienen, wie 1,3-Butadien, 1,3-Pentadien, 1,3-Hexadien, 2,3-Dimethylbutadien, Isopren, Piperylen oder Isopren, α,β-ungesättigten Carbonsäuren, wie Acrylsäure und Methacrylsäure, deren Estern, insbesondere Alkylester, wie C₁₋₁₀-Alkylester der Acrylsäure, insbesondere die Butylester, vorzugsweise n-Butyl-acrylat, und die C₁₋₁₀-Alkylester der Methacrylsäure, insbesondere Methylmethacrylat (MMA), oder Carbonsäureamide, beispielsweise Acrylsäureamid und Methacrylsäure-amid.

Die Polymeren können gegebenenfalls 1 bis 5 Gew.-% Comonomere, wie (Meth)acrylnitril, (Meth)acrylamid, Ureido(meth)acrylat, 2-Hydroxyethyl(meth)acrylat, 3-Hydroxypropyl(meth)acrylat, Acrylamidpropansulfonsäure, Methylolacrylamid oder das Natriumsalz der Vinylsulfonsäure enthalten.

Besonders bevorzugt ist das verfilmende Polymer aus ein oder mehreren der Monomeren Styrol, Butadien, Acrylsäure, Methacrylsäure, C₁₋₄-Alkylacrylaten, C₁₋₄-Alkylmethacrylaten, Acrylsäureamid, Methacrylsäureamid und Methylolacrylsäureamid aufgebaut.

Bevorzugt wird zur Verringerung der Wärmeleitfähigkeit ein Infrarots-Absorbierendes Pigment (IR-Absorber), wie Ruß, Koks, Aluminium, Graphit oder Titandioxid in Mengen von 5 bis 40 Gew.-%, insbesondere in Mengen von 10 bis 30 Gew.-%, bezogen auf den Feststoff der Beschichtung, eingesetzt. Die Partikelgröße des IR-absorbierenden Pigments liegt in der Regel im Bereich von 0,1 bis 100 µm, insbesondere im Bereich von 0,5 und 10 µm.

Bevorzugt wird Ruß mit einer mittleren Primär-Teilchengröße im Bereich von 10 bis 300 nm, insbesondere im Bereich von 30 bis 200 nm eingesetzt. Die BET-Oberfläche liegt bevorzugt im Bereich von 10 bis 120 m²/g.

Als Graphit wird bevorzugt Graphit mit einer mittleren Teilchengröße im Bereich von 1 bis 50 µm eingesetzt.

Des Weiteren kann die Beschichtungszusammensetzung Flammschutzmittel, wie Blähgraphit, Borate, insbesondere Zinkborate, Melaminverbindungen oder Phosphorverbindungen oder intumeszierende Massenenthalten, welche sich bei Einwirkung höherer Temperaturen, in der Regel über 80 bis 100°C, aufblähen, quellen oder aufschäumen und dabei einen isolierenden und hitzebeständigen Schaum bilden, der die darunter liegenden wärmedämmende Schaumstoffpartikel vor der Feuer- und Hitzewirkung schützt

Bei Verwendung von Flammschutzmitteln in der Polymerbeschichtung, ist es auch möglich, einen ausreichenden Brandschutz mit Schaumstoffpartikeln, die keine, insbesondere keine halogenierten Flammschutzmittel enthalten, zu erreichen, bzw. mit geringeren Mengen an Flammschutzmittel auszukommen, da sich das Flammschutzmittel in der Polymerbeschichtung konzentriert auf der Oberfläche der Schaumstoffpartikel befindet und bei Hitze- oder Feuereinwirkung ein festes Gerüstnetz bildet.

Die Beschichtungszusammensetzung kann als zusätzliche Additive intumeszierende Massen, die chemisch gebundenes Wasser enthalten oder bei Temperaturen über 40°C Wasser abspalten, wie Metallhydroxide, Metallsalz-Hydrate und Metalloxid-Hydrate.

Geeignete Metallhydroxide sind insbesondere solche der Gruppen 2 (Erdalkalimetalle) und 13 (Bor-Gruppe) des Periodensystems. Bevorzugt sind Magnesiumhydroxid, Aluminiumhydroxid und Borax. Besonders bevorzugt ist Alumniniumhydroxid.

Als Metallsalz-Hydrate eignen sich alle Metallsalze, in deren Kristallstruktur Kristallwasser eingebaut ist. Analog eignen sich als Metalloxid-Hydrate alle Metalloxide, die in die Kristallstruktur eingebautes Kristallwasser enthalten. Dabei kann die Anzahl der Kristallwassermoleküle pro Formeleinheit die maximal mögliche sein oder darunter liegen, z.B. Kupfersulfat-Pentahydrat, -Trihydrat oder-Monohydrat. Zusätzlich zum Kristallwasser können die Metallsalz-Hydrate bzw. Metalloxid-Hydrate auch Konstitutionswasser enthalten.

Bevorzugte Metallsalz-Hydrate sind die Hydrate von Metallhalogeniden (insbesondere -chloriden), -sulfaten, -carbonaten, -phosphaten, -nitraten oder -boraten. Geeignet sind beispielsweise Magnesiumsulfat-Decahydrat, Natriumsulfat-Decahydrat, Kupfersulfat-Pentahydrat, Nickelsulfat-Heptahydrat, Cobalt(II)chlorid-Hexahydrat, Chrom(III)-chlorid-Hexahydrat, Natriumcarbonat-Decahydrat, Magnesiumchlorid-Hexahydrat, und die Zinnborat-Hydrate. Magnesiumsulfat-Decahydrat und Zinnborat-Hydrate sind besonders bevorzugt.

Ebenfalls als Metallsalz-Hydrate in Betracht kommen Doppelsalze bzw. Alaune, beispielsweise solche der allgemeinen Formel: M^{I}M^{III}(SO₄)₂ · 12 H₂O. Als M^{I} können z.B. Kalium, Natrium, Rubidium, Cäsium, Ammonium, Thallium oder Aluminium-Ionen auftreten. Als M^{III} fungieren z.B. Aluminium, Gallium, Indium, Scandium, Titan, Vanadium, Chrom, Mangan, Eisen, Kobalt, Rhodium oder Iridium.

Als Metalloxid-Hydrate eignen sich z.B. Aluminiumoxid-Hydrat und bevorzugt Zinkoxid-Hydrat oder Bortrioxid-Hydrat.

Neben den Tonmineralien können der Beschichtung zusätzlich noch weitere Mineralien, beispielsweise Zemente, Aluminiumoxide, Vermicullit oder Pedit zugesetzt werden. Diese können der Beschichtungszusammensetzung in Form von wässrigen Aufschlämmungen oder Dispersionen eingebracht werden. Zemente können auch durch "Bepudern" auf die Schaumstoffpartikel aufgebracht werden. Das für die Abbindung des Zementes notwendige Wasser kann dann beim Versintern mit Wasserdampf zugeführt werden.

Die Beschichtungszusammensetzung wird insbesondere zur Beschichtung von Schaumstoffpartikeln eingesetzt.

Als Schaumstoffpartikel können expandierte Polyolefine, wie expandiertes Polyethylen (EPE) oder expandiertes Polypropylen (EPP) oder vorgeschäumte Partikel aus expandierbaren Styrolpolymeren, insbesondere expandierbarem Polystyrol (EPS) eingesetzt werden. Die Schaumstoffpartikel weisen in der Regel einen mittleren Partikeldurchmesser im Bereich von 2 bis 10 mm auf. Die Schüttdichte der Schaumstoffpartikel beträgt in der Regel 5 bis 100 kg/m³, bevorzugt 5 bis 40 kg/m³ und insbesondere 8 bis 16 kg/m³, bestimmt nach DIN EN ISO 60.

Die Schaumstoffpartikel auf Basis von Styrolpolymeren können durch Vorschäumen von EPS mit Heißluft oder Wasserdampf in einem Vorschäumer auf die gewünschte Dichte erhalten werden. Durch ein- oder mehrmaliges Vorschäumen in einem Druck-oder kontinuierlichen Vorschäumer können hierbei Endschüttdichten unter 10 g/l erhalten werden.

Zur Herstellung von Dämmstoffplatten mit hoher Wärmedämmfähigkeit verwendet man besonders bevorzugt vorgeschäumte, expandierbare Styrolpolymerisate, die athermane Festkörper, wie Ruß, Aluminium, Graphit oder Titandioxid, insbesondere Graphit einer mittleren Partikelgröße im Bereich von 1 bis 50 µm Partikeldurchmesser in Mengen von 0,1 bis 10 Gew.-%, insbesondere 2 bis 8 Gew.-%, bezogen auf EPS, enthalten und beispielsweise aus EP-B 981 574 und EP-B 981 575 bekannt sind.

Des Weiteren können die Schaumstoffpartikel 3 bis 60 Gew.-%, bevorzugt 5 bis 20 Gew.-%, bezogen auf die vorgeschäumten Schaumstoffpartikel, eines Füllstoffes enthalten. Als Füllstoffe kommen organische und anorganische Pulver oder Faserstoffe, sowie Mischungen davon in Betracht. Als organische Füllstoffe können z. B. Holzmehl, Stärke, Flachs-, Hanf-, Ramie-, Jute-, Sisal-, Baumwoll-, Cellulose- oder Aramidfasern eingesetzt werden. Als anorganische Füllstoffe können z. B. Carbonate, Silikate, Schwerspat, Glaskugeln, Zeolithe oder Metalloxide eingesetzt werden. Bevorzugt werden pulverförmige anorganische Stoffe, wie Talk, Kreide, Kaolin (Al₂(Si₂O₅)(OH)₄), Aluminiumhydroxid, Magnesiumhydroxid, Aluminiumnitrid, Aluminiumsilikat, Bariumsulfat, Calciumcarbonat, Calciumsulfat, Kieselsäure, Quarzmehl, Aerosil®, Tonerde oder Wollastonit oder Kugel- oder faserförmige, anorganische Stoffe, wie Glaskugeln, Glasfasern oder Kohlefasern.

Die mittleren Teilchendurchmesser bzw. bei faserförmigen Füllstoffen die Länge sollte im Bereich der Zellgröße oder kleiner liegen. Bevorzugt wird ein mittlerer Teilchendurchmesser im Bereich von 1 bis 100 µm, bevorzugt im Bereich von 2 bis 50 µm.

Besonders bevorzugt werden anorganische Füllstoffe mit einer Dichte im Bereich von 1,0 - 4,0 g/cm³, insbesondere im Bereich von 1,5 - 3,5 g/cm³. Der Weißgrad/Helligkeit (DIN/ISO) beträgt bevorzugt 50-100 %, insbesondere 60 - 98 %.

Die Art und Menge der Füllstoffe können die Eigenschaften der expandierbaren thermoplastischen Polymeren und der daraus erhältlichen Partikelschaumstoffformteile beeinflussen. Durch die Verwendung von Haftvermittlern, wie Maleinsäureanhydridmodifizierte Styrolcopolymere, epoxidgruppenhaltige Polymere, Organosilane oder Styrolcopolymere mit Isocyanat- oder Säuregruppen kann die Anbindung des Füllstoffes an die Polymermatrix und damit die mechanischen Eigenschaften der Partikelschaumformteile deutlich verbessert werden.

In der Regel verringern anorganische Füllstoffe die Brennbarkeit. Insbesondere durch Zusatz von anorganischen Pulvern, wie Aluminiumhydroxid, Magnesiumhydroxid oder Borax, kann das Brandverhalten weiter verbessert werden.

Derartige füllstoffhaltiger Schaumstoffpartikel können beispielsweise durch Verschäumen von füllstoffhaltigen, expandierbaren thermoplastischen Granulaten erhalten werden. Bei hohen Füllstoffgehalten können die hierfür benötigten expandierbaren Granulate durch Extrusion treibmittelhaltiger Thermoplastschmelzen und anschließende Druckunterwassergranulierung, wie z. B. in WO 2005/056653 beschrieben, erhalten werden.

Die Polymerschaumstoffpartikel können zusätzlich mit weiteren Flammschutzmitteln ausgerüstet sein. Sie können hierzu beispielsweise 1 bis 6 Gew.-% einer organischen Bromverbindung, wie Hexabromcylcododecan (HBCD) und gegebenenfalls zusätzlich 0,1 bis 0,5 Gew.-% Dicumyl oder eines Peroxides im Innem der Schaumstoffpartikel oder der Beschichtung enthalten. Bevorzugt werden jedoch keine halogenhaltigen Flammschutzmittel verwendet.

Bevorzugt wird die erfindungsgemäße Beschichtungszusammensetzung in Form einer wässrigen Polymerdispersion zusammen mit dem Tonmineral und dem Alkali-silikat und gegebenenfalls Infrarot-Absorbierenden Pigmenten und weiteren Additiven auf die Schaumstoffpartikel aufgetragen. Geeignete Polymerdispersionen sind beispielsweise durch radikalische Emulsionspolymerisation von ethylenisch ungesättigten Monomeren, wie Styrol, Acrylate oder Methacrylate, wie in WO 00/50480 beschrieben, erhältlich.

Die Herstellung der Polymerdispersion erfolgt in an sich bekannter Weise, etwa durch Emulsions-, Suspensions-, oder Dispersionspolymerisation, bevorzugt in wässriger Phase. Man kann das Polymer auch durch Lösungs- oder Massepolymerisation herstellen, ggf. zerteilen und die Polymerpartikel anschließend in Wasser in üblicher Weise dispergieren. Bei der Polymerisation werden die für das jeweilige Polymerisationsverfahren üblichen Initiatoren, Emulgatoren bzw. Suspensionshilfsmittel, Regler bzw. sonstigen Hilfsstoffe mit verwendet; und man polymerisiert kontinuierlich oder diskontinuierlich bei den für das jeweilige Verfahren üblichen Temperaturen und Drucken in gebräuchlichen Reaktoren.

Das in der Beschichtungsmischung enthaltende Wasserglaspulver führt zu einer besseren bzw. schnelleren Verfilmung der Polymerdispersion und damit einem schnelleren Aushärten des Schaumstoffformteils. Gegebenenfalls können zusätzlich hydraulischen Bindemitteln auf Basis von Zement, Kalkzement oder Gips zugegeben werden in Mengen, bei denen keine nennenswerte Versprödung des Schaumstoffes auftritt.

Zur Beschichtung der Schaumstoffpartikel können übliche Verfahren, wie Besprühen, Tauchen oder Benetzen der Schaumstoffpartikel mit einer wässrigen Polymerdispersion in üblichen Mischern, Sprühvorrichtungen, Tauchvorrichtungen bzw. Trommelapparaturen eingesetzt werden.

Des Weiteren können die erfindungsgemäß beschichteten Schaumstoffpartikel zusätzlich mit amphiphilen oder hydrophoben organische Verbindung beschichtet werden. Die Beschichtung mit Hydrophobierungsmittel erfolgt zweckmäßigerweise vor dem Aufbringen der erfindungsgemäßen wässrigen Polymerdispersion. Unter den hydrophoben organischen Verbindungen sind insbesondere C₁₀ - C₃₀- Paraffinwachse, Umsetzungsprodukte aus N-Methylolamin und einem Fettsäurederivate, Umsetzungsprodukte eines C₉-C₁₁-Oxoalkohols mit Ethylenoxid, Propylenoxid oder Butylenoxid oder Polyfluoralkyl(meth)-acrylate oder Mischungen davon zu nennen, die vorzugsweise in Form wässriger Emulsionen eingesetzt werden können.

Bevorzugte Hydrophobierungsmittel sind Paraffinwachse mit 10 bis 30 C-Atomen in der Kohlenstoffkette, die vorzugsweise einen Schmelzpunkt zwischen 10 und 70°C, insbesondere zwischen 25 und 60°C, aufweisen. Derartige Paraffinwachse sind beispielsweise in den BASF-Handelsprodukten RAMASIT KGT, PERSISTOL E und PERSISTOL HP sowie in AVERSIN HY-N von Henkel und CEROL ZN von Sandoz enthalten.

Eine andere Klasse geeigneter Hydrophobierungsmittel sind harzartige Umsetzungsprodukte von einem N-Methylolamin mit einem Fettsäurederivat, z.B. einem Fettsäureamid, -amin oder -alkohol, wie sie z.B. in US-A 2 927 090 oder GB-A 475 170 beschrieben sind. Ihr Schmelzpunkt liegt im allgemeinen bei 50 bis 90°C. Derartige Harze sind z.B. in dem BASF-Handelsprodukt PERSISTOL HP und in ARCOPHOB EFM von Hoechst enthalten.

Schließlich sind auch Polyfluoralkyl(meth-)acrylate geeignet, beispielsweise Polyperfluoroctylacrylat. Diese Substanz ist in dem BASF-Handelsprodukt PERSISTOL O und in OLEOPHOBOL C von Pfersee enthalten.

Als weitere Beschichtungsmittel kommen Antistatika, wie Emulgator K30 (Gemisch aus sekundären Natriumalkansulfonaten) oder Glycerinstearate, wie Glycerinmonostearat GMS oder Glycerintristearat in Betracht. Das erfindungsgemäße Verfahren zeichnet sich jedoch dadurch aus, dass die für die Beschichtung von expandierbarem Polystyrol üblichen Beschichtungsmittel, insbesondere Stearate in reduziertem Umfang eingesetzt oder ganz entfallen können, ohne die Produktqualität negativ zu beeinflussen.

Zur Herstellung von Schaumstoffformkörpern, können die mit der erfindungsgemäßen Beschichtung versehenen Schaumstoffpartikel in einer Form versintert werden. Dabei können die beschichteten Schaumstoffpartikel in noch feuchtem Zustand oder nach Trocknung eingesetzt werden.

Die Trocknung der auf die Schaumstoffpartikel aufgetragenen Polymerdispersion kann beispielsweise in einem Wirbelbett, Schaufeltrockner oder durch Durchleiten von Luft oder Stickstoff durch eine lockere Schüttung erfolgen. In der Regel ist für die Bildung des wasserunlöslichen Polymerfilmes eine Trocknungsdauer von 5 Minuten bis 24 Stunden, vorzugsweise 30 bis 180 Minuten bei einer Temperatur im Bereich von 0 bis 80°C, bevorzugt im Bereich von 30 bis 60°C ausreichend.

Der Wassergehalt der beschichteten Schaumstoffpartikel liegt nach der Trocknung bevorzugt im Bereich von 1 bis 40 Gew.-%, besonders bevorzugt im Bereich von 2 bis 30 Gew.-%, ganz besonders bevorzugt im Bereich von 5 bis 15 Gew.-%. Er kann beispielsweise durch Karl-Fischer-Titration der beschichteten Schaumstoffpartikel bestimmt werden. Das Gewichtsverhältnis Schaumstoffpartikel/Beschichtungsmischung beträgt nach der Trocknung bevorzugt 2:1 bis 1:10, besonders bevorzugt 1:1 bis 1:5.

Die erfindungsgemäß beschichteten Schaumstoffpartikel können in üblichen Formen mit Heißluft oder Wasserdampf zu Schaumstoffformkörpern versintert werden.

Beim Versintern bzw. Verkleben der Schaumstoffpartikel kann der Druck beispielsweise durch Verkleinerung des Volumens der Form mittels eines beweglichen Stempels erzeugt werden. In der Regel wird hierbei ein Druck im Bereich von 0,5 bis 30 kg/cm² eingestellt. Die Mischung aus beschichteten Schaumstoffpartikeln wird hierzu in die geöffnete Form gefüllt. Nach dem Verschließen der Form werden die Schaumstoffpartikel mit dem Stempel verpresst, wobei die Luft zwischen den Schaumstoffpartikeln entweicht und das Zwickelvolumen verringert wird. Die Schaumstoffpartikel werden durch die Polymerbeschichtung zum Schaumstoffformkörper verbunden.

Vorzugsweise erfolgt eine Verdichtung auf etwa 50% des Ausgangsvolumens. Bei einer Form mit einem Querschnitt von etwa 1 m² ist hierfür in der Regel ein Druck von 1 bis 5 bar ausreichend.

Das Formwerkzeug wird entsprechend der gewünschten Geometrie des Schaumstoffkörpers ausgestaltet. Der Füllgrad richtet sich u.a. nach der gewünschten Dicke des späteren Formteils. Für Schaumstoffplatten kann eine einfache kastenförmige Form verwendet werden. Insbesondere bei komplizierteren Geometrien kann es erforderlich sein, die Schüttung der in die Form eingefüllten Partikel zu verdichten und auf diese Weise unerwünschte Hohlräume zu beseitigen. Das Verdichten kann z.B. durch Rütteln der Form, Taumelbewegungen oder andere geeignete Maßnahmen erfolgen.

Zur Beschleunigung des Abbindens kann Heißluft oder Wasserdampf in die Form eingedrückt oder die Form beheizt werden. Zur Temperierung der Form können jedoch beliebige Wärmeträgermedien, wie Öl oder Dampf eingesetzt werden. Die Heißluft bzw. die Form wird hierfür zweckmäßigerweise auf eine Temperatur im Bereich von 20 bis 120°C, bevorzugt 30 bis 90°C temperiert.

Alternativ oder zusätzlich kann das Versintern kontinuierlich oder diskontinuierlich unter Einstrahlung von Mikrowellenenergie erfolgen. Hierbei werden in der Regel Mikrowellen im Frequenzenbereich zwischen 0,85 und 100 GHz, bevorzugt 0,9 bis 10 GHz und Bestrahlungszeiten zwischen 0,1 bis 15 Minuten verwendet. Damit lassen sich auch Schaumstoffplatten mit einer Dicke von mehr als 5 cm herstellen.

Bei Verwendung von Heißluft oder Wasserdampf mit Temperaturen im Bereich von 80 bis 150°C oder durch Einstrahlen von Mikrowellenenergie bildet sich üblicherweise ein Überdruck von 0,1 bis 1,5 bar, so dass das Verfahren auch ohne äußeren Druck und ohne Volumenverringerung der Form durchgeführt werden kann. Der durch die Mikrowellen oder höheren Temperaturen entstehende Innendruck lässt die Schaumstoffpartikel leicht weiterexpandieren, wobei diese zusätzlich zur Verklebung über die Polymerbeschichtung auch durch Erweichung der Schaumstoffpartikel selbst verschweißen können. Dabei verschwinden die Zwickel zwischen den Schaumstoffpartikeln. Zur Beschleunigung des Abbindens kann auch hier die Form wie oben beschrieben mit einem Wärmeträgermedium zusätzlich beheizt werden.

Zur kontinuierlichen Herstellung der Schaumstoffformkörper eignen sich auch Doppelbandanlagen wie sie zur Herstellung von Polyurethanschaumstoffen verwendet werden. Beispielsweise können die vorgeschäumten und beschichteten Schaumstoffpartikel kontinuierlich auf das untere von zwei Metallbänder, welche gegebenenfalls eine Perforation aufweisen können, aufgetragen werden und mit oder ohne Kompression durch die zusammenlaufenden Metallbänder zu endlosen Schaumstoffplatten verarbeitet werden. In einer Verfahrensausführung wird das Volumen zwischen den beiden Bändern zunehmend verringert, wodurch das Produkt zwischen den Bändern komprimiert wird und die Zwickel zwischen den Schaumstoffpartikeln verschwinden. Nach einer Aushärtungszone wird eine Endlos-Platte erhalten. In einer anderen Ausführungsform kann das Volumen zwischen den Bändern konstant gehalten werden und eine Zone mit Heißluft oder Mikrowellenbestrahlung durchlaufen in der die Schaumstoffpartikel nachschäumen. Auch hier verschwinden die Zwickel und eine Endlosplatte wird erhalten. Es ist auch möglich, die beiden kontinuierlichen Verfahrensauführungen zu kombinieren.

Die Dicke, Länge und Breite der Schaumstoffplatten kann in weiten Grenzen variieren und wird durch die Größe und Schließkraft des Werkzeugs begrenzt. Die Dicke der Schaumstoffplatten beträgt üblicherweise 1 bis 500 mm, bevorzugt 10 bis 300 mm.

Die Dichte der Schaumstoffformkörper gemäß DIN 53420 beträgt in der Regel 10 bis 150 kg/m³, bevorzugt 20 bis 90 kg/m³. Mit dem Verfahren ist es möglich, Schaumstoffformkörper mit gleichmäßiger Dichte über den gesamten Querschnitt zu erhalten. Die Dichte der Randschichten entspricht etwa der Dichte der inneren Bereiche des Schaumstoffformkörpers.

Bei dem Verfahren können auch zerkleinerte Schaumstoffpartikel aus recyclierten Schaumstoffformkörpern eingesetzt werden. Zur Herstellung der erfindungsgemäßen Schaumstoffformkörper können die zerkleinerten Schaumstoffrecyclate zu 100 % oder z. B in Anteilen von 2 bis 90 Gew.-% insbesondere 5 bis 25 Gew.-% zusammen mit Neuware eingesetzt werden, ohne wesentliche Beeinträchtigung der Festigkeit und der mechanischen Eigenschaften.

Der Beschichtung können auch weitere Zuschlagstoffe, wir Gummi aus Altreifen oder Vermiculite zugegeben werden, um die mechanischen und hydraulischen Eigenschaften zu modifizieren

Ein bevorzugtes Verfahren umfasst die Stufen:
i) Vorschäumen von expandierbaren Styrolpolymeren zu Schaumstoffpartikeln,
ii) Aufbringen der erfindungsgemäßen Beschichtungszusammensetzung über eine wässrige Polymerdispersion auf die Schaumstoffpartikel,
iii) Trocknen der Polymerdisperision auf den Schaumstoffpartikeln unter Bildung eines wasserunlöslichen Polymerfilms
iv) Einfüllen der mit dem Polymerfilm beschichteten Schaumstoffpartikel in eine Form und Versintern.

Das Verfahren eignet sich zur Herstellung von einfachen oder komplexen Schaumstoffformteilen, wie Platten, Blöcken, Rohren, Stäben, Profilen, etc. Bevorzugt werden Platten oder Blöcke, welche anschließend zu Platten gesägt oder geschnitten werden können, hergestellt. Sie können beispielsweise im Bauwesen zur Dämmung von Außenwänden verwendet werden. Besonders bevorzugt werden sie als Kernschicht zur Herstellung von Sandwich-Element, beispielsweise so genannten structural insulation panels (SIP) verwendet, welch für die Errichtung von Kühlhäuser oder Lagerhallen eingesetzt werden.

Das erfindungsgemäß wendeten Tonmineralien lassen sich leicht in wässrigen Polymerdispersionen dispergieren und auf die vorgeschäumten Schaumstoffpartikeln auftragen. Die Keramisierung mit dem Alkalisilikat erfolgt erst im Brandfall bei Temperaturen von etwa über 500°C. Die Verwendung von Tonmineralien, wie Kaolin in der Beschichtungszusammensetzung führt nicht zu einem Verspröden des SchaumstoffFormteils beim Versintern. Die im Brandfall entstehende poröse keramische Gerüststruktur hält anschließend Temperaturen von über 1000°C stand.

Die mit der erfindungsgemäßen Beschichtung versehenen Schaumstoffpartikeln können zu Schaumstoff-Formteilen versintert werden, die einen hohen Feuerwiderstandswert E30, insbesondere E60 beziehungsweise F30 insbesondere F60 aufweisen und auch bei längerer Beflammung von über 30 bzw. 60 Minuten den Flammendurchtritt verhindern und die strukturelle Integrität durch die entstehende poröse keramische Gerüststruktur erhalten bleibt.

Bei der Errichtung von Kühl- und Lagerhallen, werden in der Regel Dichtungsbänder in den Fugen zwischen den einzelnen Sandwichelementen (Panelen) eingesetzt. Idealerweise sollte die Abdichtung so ausgelegt sein, dass die Gasdichtigkeit der dem Brandherd abgewandten Fuge auch dann noch erhalten bleibt, wenn die Paneele im Brandfall, d.h. bei Hitzeeinwirkung, Dimensionsänderungen unterworfen ist, die im Bereich der Fugen zu Krafteinwirkungen und daraus resultierenden Verschiebungen in unterschiedliche Raumrichtungen führen kann.

Dichtbänder aus Polyurethanen verspröden in der Regel bei ca. 120°C. Wenn heiße Dämpfe an das Dichtungsband gelangen versprödet dieses und verliert damit seine Dichteigenschaften. Daher kommt es zum Durchbruch der heißen Gase und der entsprechenden Aufheizung der Temperatursensoren an der Außenseite.

Bevorzugt werden Dichtungsbänder verwendet, die auch bei höheren Temperaturen eine gewisse Elastizität besitzen. D.h. wenn sich Fuge und Band erwärmen und "verziehen" dichtet das Band noch immer ab (Luftdichtigkeit). Dadurch gelingt es den Gasen nicht vorne auszutreten. Dies zeigte sich z.B. daran, dass auch nach 30 min. nahezu kein Temperaturunterschied zwischen Fuge und Fläche zu erkennen ist. Hierbei ist es nicht nötig einen asymmetrischen Aufbau vorzunehmen, da es im Inneren des Ofens innerhalb sehr kurzer Zeit zu sehr hohen Temperaturen kommt, woraufhin sich die äußeren Bleche der Sandwichelemente vom Kern ablösen. Daher entstehen so große Freiräume, die es den Gasen sofort ermöglichen ins Innere des Ofens zu entweichen.

Die Dichtungsbänder sollten bei Hitzeeinwirkung nicht nur elastisch bleiben sondern in gewissen Grenzen auch noch "nachblähen" können, d.h. intumeszierende Eigenschaften besitzen, um im Falle von Dimensionsänderungen im Bereich der Fuge, insbesondere bei Spaltenbildung, die Gasdichtigkeit aufrecht erhalten zu können. Vorzugsweise werden daher intumeszierende Dichtungsbänder zwischen den anstoßenden Kernenschichten der Sandwichelemente eingesetzt, die dann schrittweise bei einer Aufweitung der Fuge aufschäumen und sowohl die Temperatur-, wie auch die Gasausbreitung bremsen. Durch diese Maßnahme lässt sich die Temperaturbelastung, die auf die dem Brandherd abgewandte Fuge wirkt, reduzieren und so die Standzeit der "äußeren Fuge" deutlich verbessern.

Denkbar sind auch schaumstoffartige Strukturen oder elastische Faserstrukturen, die während des Aufbaus der Panelenkonstruktion in die Fugen eingelegt und beim endgültigen Fixieren der Panelen auf der Unterkonstruktion zusammengepresst werden. Im Brandfalle, insbesondere wenn die Panelen auf Grund der Hitzeeinwirkung Dimensionsänderungen unterworfen sind, kann sich dieses elastische "Inlay" den veränderten Dimensionen im Bereich der Fuge anpassen und diese dadurch effizienter abdichten. Geeignet hierfür sind bespielsweise Melaminharzschaumstofffe (Basotect® der BASF SE), Mineralwollstreifen oder ein flammgeschützter Polyethylenschaumstoffstreifen.

Die Kerne könnten ferner mit einem Profil, z.B. Stufenfalz oder Nut und Feder, mit integrierter oder einzusetzender Feder, versehen werden, so dass die Kerne ineinander greifen und dadurch ebenfalls besser abdichten.

Von Bedeutung ist auch die Geometrie der Fuge. Bevorzugt werden "Standard-Fugen" mit möglichst großer Überlappung und mechanischer Steifigkeit. Zur Abdichtung der Fuge eigenen sich aus dem Kernmaterial gefräste Nut und Federn, beispielsweise nach dem Inta-Lock Konzept, mit in das Kernmaterial eingefräster, mehrere Zentimeter tiefer Nut aber mit loser, nachträglich auf der Baustelle einzusetzender Feder. Diese kann aus einer Großzahl hitzebeständiger Materialien hergestellt sein und dient primär dazu den Gasaustritt durch die Fuge im Brandfall zu verhindern/reduzieren, selbst wenn das Kernmaterial durch die Hitzeeinwirkung etwas schrumpft oder die Panele sich im Bereich der Fuge deformiert, was ohne eingesetzte Feder zu einem Klaffen und daraus resultierendem Austritt von heißen Brandgassen im Bereich der Fuge führen würde.

Als Materialien für die Feder eignen sich beispielsweise Regips-Streifen, Streifen aus aus Silikon oder intumeszierenden Materialien wie Blähgraphit oder Silikaten, beispielsweise Palusol® oder der erfindungsgemäßen Beschichtungszusammensetzung, Mineralfaser-Keile, Keile aus Melaminharzschaumstoffen (Basotect®), dünne Bleckstreifen, die beidseitig in eine dünne Nut eingeführt werden können.

Die Federn können gegebenenfalls mechanisch durch Schrauben, Nieten etc fixiert werden. Desweiteren eigenen sich elastische Inlays und Dichtungsbänder, die in die metallischen Vertiefung des Fugenprofils eingelegt werden und bei Hitzeeinwirkung quellen und die Fugen abdichten. Die elastischen Inlays in der Fläche würden beim Aufbau der Panelenwand zwischen den Stößen des Kernmaterials komprimiert und im Brandfall, falls die Fuge durch die Hitzeeinwirkung klafft, schrumpft oder deformiert wird, innerhalb gewisser Grenzen abdichtend wirken oder zumindest das Ausströmen von Brandgasen deutlich reduzieren.

Anwendungsmöglichkeiten sind Paletten aus Schaumstoff als Ersatz für Holzpaletten, Deckensichtplatten, Kühlcontainer, Wohnwagen. Aufgrund der hervorragenden Feuerbeständigkeit eignen sich diese auch für die Luftfracht.

### Beispiele:

Herstellung der Beschichtungsmischungen :
Zu einer Mischung aus Kaolin (Fluka), Wasserglaspulver (37 %ig, Wöllner) und gegebenenfalls Titandioxid (Kronos 2220) und Magnesiumhydroxid (95 %ig, Fluka) wurden unter Rühren die in Tabelle 1 angegebenen Gewichtsanteile einer Acrylatdispersion (Acronal S790, Feststoffgehalt ca. 50 %) und vollentsalztes Wasser (VE-Wasser) zugegeben.
Polystyrolschaumstoffpartikel (Dichte 10 g/l)
Graphithaltiges, expandierbares Polystyrol (Neopor® 2300 der BASF Aktiengesellschaft) wurde auf einem kontinuierlichen Vorschäumer auf eine Dichte von ca. 10 g/l vorgeschäumt.

### Beispiel 1-6

Die Polystyrolschaumstoffpartikel wurden in einem Mischer mit einer Beschichtungsmischung mit der in Tabelle 1 in Gewichtsanteilen angegebenen Zusammensetzung im Gewichtsverhältnis 1:4 homogen beschichtet. Die beschichteten Polystyrolschaumstoffpartikel wurden in eine Aluminiumform (20 cm x 20 cm) gefüllt und unter Druck auf 50% des ursprünglichen Volumens verpresst. Das Formteil wurde aus der Form genommen und die Wärmeleitfähigkeit bei 20°C in einem Zweiplattenmeßgerät nach ANACON, angelehnt an DIN 52612 bestimmt. Die Volumenreduktion wurde als Maß für die Stabilität der keramisierten Struktur nach 5 Minuten Lagerung bei 1050°C im Tiegelofen bestimmt.

Die Schaumstoffformkörper der Beispiele 1 bis 6 zeichnen sich dadurch aus, dass sie im Brandtest nicht abtropfen und bei Hitzeeinwirkung nicht zurückweichen. Sie sind selbstverlöschend. Die Verwendung von Titandioxid (Beispiele 2 - 6) in der Beschichtung auf Basis von Wasserglaspulver/Kaolin bewirkt eine deutliche Verringerung der Wärmeleitfähigkeit im Vergleich zu Beispiel 1.

### Vergleichsversuch 1

Es wurde wie in Beispiel 1 vorgegangen, jedoch für die Beschichtung anstelle von Kaolin eine wässrige Wasserglaslösung (Woellner Natriumsilikat 38/40, Feststoffanteil 36%, Dichte 1,37 Molverhältnis SiO₂:Na₂O = 3,4) eingesetzt.

**Tabelle 1**

| | | Bsp.1 | Bsp. 2 | Bsp.3 | Bsp.4 | Bsp. 5 | Bsp.6 | V1 |
|---|---|---|---|---|---|---|---|---|
| Beschichtungsmittel-zusammensetzung | | | | | | | | |
| | Wasserglaspulver | 100 | 100 | 100 | 140 | 100 | 60 | 80 |
| | Wasserglaslösung | | | | | | | 120 |
| | Kaolin | 100 | 100 | 70 | 60 | 100 | 120 | |
| | Titandioxid | | 20 | 30 | 20 | 20 | 20 | |
| | Magnesiumhydroxid | | | 10 | | | | |
| | Aluminiumhydroxid | | | | | | | |
| | Acronal® S 790 | 22 | 22 | 22 | 22 | 22 | 22 | 10 |
| | VE-Wasser | 80 | 80 | 80 | 80 | 80 | 80 | |
| EPS/Beschichtungsmittel | | 1 : 4 | 1 : 4 | 1 : 4 | 1 : 4 | 1 : 4 | 1 : 4 | 1 : 4 |
| Sinterbedingungen | | | | | | | | |
| | Temperatur [°C] | 70 | 70 | 70 | 70 | 70 | 70 | 70 |
| | Zeit [Minuten] | 90 | 90 | 90 | 90 | 90 | 120 | 60 |
| Eigenschaften | | | | | | | | |
| | 'Wärmeleitfähigkeit λ [mW/m*K] | 45 | 41 | 41 | | 41 | | |
| | Volumenabnahme [%] nach 5 Minuten bei 1050°C | 25 | 15 | 17 | 85 | 15 | | 85 |

### Vergleichsversuch 2

Zu der Beschichtungszusammensetzung nach Vergleichsversuch 1 wurden bei gleichen Gewichtsanteilen Wasserglaspulver (80 g) und Wasserglaslösung (120 g) entsprechend Tabelle 2 verschiedene Mengen Zementmörtel (Fa. Sakret ZM), Acronal® und Wasser zugegeben.

Die beschichteten Polystyrolschaumstoffpartikel wurden in eine Aluminiumform (20 cm x 20 cm) gefüllt und 60 Minuten bei 70°C unter Druck auf 50% des ursprünglichen Volumens verpresst. Die Vergleichsversuche V21 und V2m wurden nicht unter Druck versintert sondern mit Wasserdampf (1bar) für 20 Sekunden nachgeschäumt. Das Formteil wurde aus der Form genommen und die Wärmeleitfähigkeit bei 20°C in einem Zweiplattenmeßgerät nach ANACON bestimmt. Die Volumenreduktion nach 5 Minuten Lagerung bei 1050°C im Tiegelofen betrug etwa 75%. Die Probe aus Vergleichsversuch V21 hatte sich entzündet.

**Tabelle 2**

| Vergleichsversuch | EPS/Zement | Zement [g] | Dispersion [g] | Wasser [g] |
|---|---|---|---|---|
| V2a | 1 : 4 | 5 | | 5 |
| V2b | 1 : 4 | 20 | | 20 |
| V2c | 1 : 4 | 20 | | 20 |
| V2d | 1 : 4 | 180 | | 80 |
| V2e | 1 : 4 | 180 | 10 | 80 |
| V2f | 1 : 6 | 270 | | 120 |
| V2g | 1 : 6 | 270 | 10 | 120 |
| V2h | 1 :10 | 450 | | 225 |
| V2i | 1 : 10 | 450 | 10 | 225 |
| V2j | 1 : 15 | 675 | | 337 |
| V2k | 1 : 15 | 675 | 50 | 337 |
| V2l | 1 : 4 | 120 | 60 | |
| V2m | 1 : 4 | 120 | 30 | |

### Vergleichsversuch 3

Zu der Beschichtungszusammensetzung nach Vergleichsversuch 1 wurden bei gleichen Gewichtsanteilen Wasserglaspulver (80 g), Wasserglaslösung (120 g) und Acronal® (10 g) entsprechend Tabelle 3 verschiedene Mengen Aluminiumhydroxid zugegeben.

Die beschichteten Polystyrolschaumstoffpartikel wurden in eine Aluminiumform (20 cm x 20 cm) gefüllt und 60 Minuten bei 70°C unter Druck auf 50% des ursprünglichen Volumens verpresst.. Das Formteil wurde aus der Form genommen und die Wärmeleitfähigkeit bei 20°C in einem Zweipattenmeßgerät nach ANACON bestimmt. Die Volumenreduktion wurde nach 5 Minuten Lagerung bei 1050°C im Tiegelofen bestimmt.

Die Proben aus den Vergleichsversuchen 3a bis 3j zeigen eine sehr schwache Matrixstabilität, wenn sie direkt mit einer Flamme in Kontakt kommen. Die Volumenreduktion nach 5 Minuten Lagerung bei 1050°C im Tiegelofen lag in allen Fällen über 75%.

**Tabelle 3:**

| Vergleichsversuch | EPS/Zement | Al(OH)3 [g] | Dichte[g/l] | λ [mW/m*K] |
|---|---|---|---|---|
| V3a | 1 : 4 | 10 | 59 | 38 |
| V3b | 1 : 4 | 20 | 59 | 39 |
| V3c | 1 : 4 | 30 | 54 | 37 |
| V3d | 1 : 4 | 40 | 56 | 39 |
| V3e | 1 : 2 | 5 | 34 | 32 |
| V3f | 1 : 2 | 10 | 34 | 33 |
| V3g | 1 : 2 | 15 | 34 | 33 |
| V3h | 1 : 2 | 20 | 35 | 33 |
| V3i | 1 : 2 | 30 | 35 | 33 |
| V3j | 1 : 2 | 40 | 35 | 33 |

## Patentansprüche

1. Beschichtungszusammensetzung, enthaltend
a) 20 bis 70 Gew.-% eines Tonminerals
b) 20 bis 70 Gew.-% eines Alkali -Silikates
c) 1 bis 30 Gew.-% eines verfilmenden Polymeren

2. Beschichtungszusammensetzung nach Anspruch 1, enthaltend
a) 30 bis 50 Gew.-% eines Tonminerals
b) 30 bis 50 Gew.-% eines Alkali -Silikates
c) 5 bis 20 Gew.-% eines verfilmenden Polymeren
d) 5 bis 40 Gew.-% eines Infrarot-Absorbierenden Pigmentes

3. Beschichtungszusammensetzung nach Anspruch 1 oder 2, **dadurch gekennzeichnet**, das das Gewichtsverhältnis Tonmineral zu Alkali-Silikat im Bereich von 1 : 2 bis 2 : 1 liegt.

4. Beschichtungszusammensetzung nach einem der Ansprüche 1 bis 3, **dadurch gekennzeichnet, dass** sie als Tonmineral Allophan Al₂[SiO₅]&O₃ · n H₂O, Kaolinit Al₄[(OH)₈|Si₄O₁₀], Halloysit Al₄[(OH)₈|Si₄O₁₀] · 2 H₂O, Montmorillonit (Smectit) (Al,Mg,Fe)₂[(OH₂|(Si,Al)₄O₁₀] · Na_{0,33}(H₂O)₄, Vermiculit Mg₂(Al,Fe,Mg)[(OH₂|(Si,Al)₄O₁₀] · Mg₀,₃₅(H₂O)₄ oder Mischungen davon enthält.

5. Beschichtungszusammensetzung nach einem der Ansprüche 1 bis 4, **dadurch gekennzeichnet, dass** sie als Alkali-Silikat ein wasserlösliches Alkalisilikate mit der Zusammensetzung M₂O(SiO₂)ₙ mit M = Natrium oder Kalium und n = 1 bis 4 oder Mischungen davon enthält.

6. Beschichtungszusammensetzung nach einem der Ansprüche 1 bis 5, **dadurch gekennzeichnet, dass** sie als verfilmendes Polymer ein Emulsionspolymerisat aus ethylenisch ungesättigten Monomeren, welches eine Glasüberganstemperatur im Bereich von -30° bis +80°C aufweist, enthält.

7. Schaumstoffpartikel mit einer Beschichtung gemäß einem der Ansprüche 1 bis 6.

8. Schaumstoffpartikel nach Anspruch 7, **dadurch gekennzeichnet, dass** die Schaumstoffpartikel aus expandierten Polyolefinpartikeln oder vorgeschäumten Partikel aus expandierbaren Styrolpolymeren (EPS) ausgewählt sind.

9. Verfahren zur Herstellung von Schaumstoffformkörpern, **dadurch gekennzeichnet, dass** man Schaumstoffpartikel nach Anspruch 7 oder 8 in einer Form versintert.

10. Verfahren nach Anspruch 9, **dadurch gekennzeichnet**, das es die Stufen
(i) Vorschäumen von expandierbaren Styrolpolymeren zu Schaumstoffpartikeln,
(ii) Aufbringen einer wässrigen Polymerdispersion, welche die Beschichtungszusammensetzung gemäß einem der Ansprüche 1 bis 6 enthält, auf die Schaumstoffpartikel,
(iii) Trocknen der Polymerdispersion auf den Schaumstoffpartikeln unter Bildung eines wasserunlöslichen Polymerfilms und
(iv) Einfüllern der mit dem Polymerfilm beschichteten Schaumstoffpartikel in eine Form und Versintern,
umfasst.

11. Verfahren nach Anspruch 9 oder 10, **dadurch gekennzeichnet, dass** das Versintern unter einem Druck im Bereich von 0,5 bis 30 kg/cm2 durchgeführt wird.

12. Verfahren nach einem der Ansprüche 9 bis 11, **dadurch gekennzeichnet, dass** das Versintern unter Einstrahlung von Mikrowellenenergie erfolgt.

13. Verfahren nach einem der Ansprüche 9 bis 12, **dadurch gekennzeichnet, dass** Heißluft oder Wasserdampf in die Form eingedrückt wird.

## Claims

1. A coating composition comprising
a) from 20 to 70% by weight of a clay mineral,
b) from 20 to 70% by weight of an alkali metal silicate,
c) from 1 to 30% by weight of a film-forming polymer.

2. The coating composition according to claim 1 comprising
a) from 30 to 50% by weight of a clay mineral,
b) from 30 to 50% by weight of an alkali metal silicate,
c) from 5 to 20% by weight of a film-forming polymer,
d) from 5 to 40% by weight of an infrared-absorbing pigment.

3. The coating composition according to claim 1 or 2, wherein the weight ratio of clay mineral to alkali metal silicate is in the range from 1:2 to 2:1.

4. The coating composition according to any of claims 1 to 3 comprising allophane Al₂[SiO₅]&O₃ · n H₂O, kaolinite Al₄[(OH)₈|Si₄O₁₀], halloysite Al₄[(OH)₈|Si₄O₁₀] · 2H₂O, montmorillonite (smectite)
(Al,Mg,Fe)₂[(OH₂| (Si,Al)₄O₁₀] · Na_{0.33}(H₂O)₄,
vermiculite
g₂(Al,Fe,Mg)[(OH₂|(Si,Al)₄O₁₀] · Mg_{0.35}(H₂O)₄ or mixtures thereof as clay mineral.

5. The coating composition according to any of claims 1 to 4 comprising a water-soluble alkali metal silicate having the composition M₂O(SiO₂)ₙ where M = sodium or potassium and n = 1 to 4 or a mixture thereof as alkali metal silicate.

6. The coating composition according to any of claims 1 to 5 comprising an emulsion polymer of ethylenically unsaturated monomers which has a glass transition temperature in the range from -30° to +80°C as film-forming polymer.

7. Foam particles having a coating according to any of claims 1 to 6.

8. The foam particles according to claim 7 selected from among expanded polyolefin particles or prefoamed particles of expandable styrene polymers (EPS).

9. A process for producing foam moldings, which comprises sintering foam particles according to claim 7 or 8 in a mold.

10. The process according to claim 9 comprising the steps
(i) prefoaming of expandable styrene polymers to form foam particles,
(ii) application of an aqueous polymer dispersion comprising the coating composition according to any of claims 1 to 6 to the foam particles,
(iii) drying of the polymer dispersion on the foam particles to form a water-insoluble polymer film, and
(iv) introduction of the foam particles which have been coated with the polymer film into a mold and sintering.

11. The process according to claim 9 or 10, wherein sintering is carried out under a pressure in the range from 0.5 to 30 kg/cm².

12. The process according to any of claims 9 to 11, wherein sintering is carried out with injection of microwave energy.

13. The process according to any of claims 9 to 12, wherein hot air or steam is injected into the mold.

## Revendications

1. Composition de revêtement, contenant
a) 20 à 70% en poids d'un minéral argileux
b) 20 à 70% en poids d'un silicate de métal alcalin
c) 1 à 30% en poids d'un polymère filmogène.

2. Composition de revêtement selon la revendication 1, contenant
a) 30 à 50% en poids d'un minéral argileux
b) 30 à 50% en poids d'un silicate de métal alcalin
c) 5 à 20% en poids d'un polymère filmogène
d) 5 à 40% en poids d'un pigment absorbant les infrarouges.

3. Composition de revêtement selon la revendication 1 ou 2, **caractérisée en ce que** le rapport pondéral de minéral argileux à silicate de métal alcalin se situe dans la plage de 1:2 à 2:1.

4. Composition de revêtement selon l'une quelconque des revendications 1 à 3, **caractérisée en ce qu'**elle contient comme minéral argileux de l'allophane Al₂[SiO₅]&O₃*n H₂O, de la kaolinite Al₄[(OH)₈] Si₄O₁₀] , de l'halloysite Al₄[(OH)₈/Si₄O₁₀] *2 H₂O, de la montmorillonite (smectite) (Al,Mg,Fe)₂[(OH₂/(Si,Al)₄O₁₀]*Na_{0,33}(H₂O)₄, de la vermiculite Mg₂(Al,Fe,Mg) [(OH₂/(Si,Al)₄O₁₀]*Mg_{0,33}(H₂O)₄ ou des mélanges de ceux-ci.

5. Composition de revêtement selon l'une quelconque des revendications 1 à 4, **caractérisée en ce qu'**elle contient comme silicate de métal alcalin un silicate de métal alcalin soluble dans l'eau présentant la composition M₂O(SiO₂)ₙ avec M = sodium ou potassium et n = 1 à 4 ou des mélanges de ceux-ci.

6. Composition de revêtement selon l'une quelconque des revendications 1 à 5, **caractérisée en ce qu'**elle contient comme polymère filmogène un polymère en émulsion de monomères éthyléniquement insaturés, qui présente une température de transition vitreuse dans la plage de -30° à +80°C.

7. Particules en mousse présentant un revêtement selon l'une quelconque des revendications 1 à 6.

8. Particules en mousse selon la revendication 7, **caractérisées en ce que** les particules en mousse sont choisies parmi les particules expansées en polyoléfine ou les particules prémoussées en polymères expansibles de styrène (EPS).

9. Procédé pour la préparation de corps façonnés en mousse, **caractérisé en ce qu'**on fritte les particules en mousse selon la revendication 7 ou 8 dans un moule.

10. Procédé selon la revendication 9, **caractérisé en ce qu'**il comprend les étapes
(i) prémoussage de polymères expansibles de styrène en particules en mousse,
(ii) application d'une dispersion polymère aqueuse, qui contient la composition de revêtement selon l'une quelconque des revendications 1 à 6, sur les particules en mousse,
(iii) séchage de la dispersion polymère sur les particules en mousse avec formation d'un film polymère insoluble dans l'eau et
(iv) déversement des particules en mousse revêtues du film polymère dans un moule et frittage.

11. Procédé selon la revendication 9 ou 10, **caractérisé en ce que** le frittage est réalisé à une pression dans la plage de 0,5 à 30 kg/cm².

12. Procédé selon l'une quelconque des revendications 9 à 11, **caractérisé en ce que** le frittage est réalisé sous irradiation d'énergie provenant de micro-ondes.

13. Procédé selon l'une quelconque des revendications 9 à 12, **caractérisé en ce qu'**on comprime de l'air chaud ou de la vapeur d'eau dans le moule.
